Europäisches Patentamt

(19) European Patent Office

Office européen des brevets

(11) Publication number: **0 113 096**
**B1**

(12) **EUROPEAN PATENT SPECIFICATION**

(45) Date of publication of patent specification: 29.04.87

(21) Application number: 83112762.6

(22) Date of filing: 19.12.83

(51) Int. Cl.⁴: **C 08 L 67/02,** C 08 L 69/00, C 08 L 33/08, C 08 L 51/04, C 08 L 51/06, C 08 L 55/02

(54) Modified polyester compositions.

(30) Priority: 03.01.83 US 454948

(43) Date of publication of application:
11.07.84 Bulletin 84/28

(45) Publication of the grant of the patent:
29.04.87 Bulletin 87/18

(84) Designated Contracting States:
DE FR GB IT NL

(56) References cited:
EP-A-0 025 920
EP-A-0 064 648
US-A-4 180 494
US-A-4 257 937

(73) Proprietor: GENERAL ELECTRIC COMPANY
1 River Road
Schenectady New York 12305 (US)

(72) Inventor: Hepp, Leonard Richard
5206 Bridgeview Drive
Evansville Indiana 47712 (US)

(74) Representative: Catherine, Alain et al
General Electric - Deutschland Munich Patent
Operation Frauenstrasse 32
D-8000 München 5 (DE)

Courier Press, Leamington Spa, England.

**0 113 096**

## Description

This invention relates to modified thermoplastic polyester compositions which may be molded or otherwise processed into articles having improved physical properties and particularly improved impact strength. Specifically, poly(1,4-butylene terephthalate) resin has been found to be a useful impact strength enhancer for impact modified polyethylene terephthalate compounds.

High molecular weight linear polyesters and copolyesters of glycols and terephthalic or isophthalic acid have been available for some time. Examples of these materials are described in US—A—2,465,319 and US—A—3,047,539 and elsewhere. Additionally, these patents disclose materials that are particularly advantageous as film and fiber formers.

With the development of molecular weight control, the use of nucleating agents and two-step molding cycles, poly(ethylene terephthalate) has become an important constituent of injection moldable compositions. Poly(1,4-butylene terephthalate), because of its very rapid crystallization from the melt, is uniquely useful as a component in such compositions. Workpieces molded from such polyester resins, alone or combined with reinforcements, in comparison with other thermoplastics, offer a high degree of surface hardness and abrasion resistance, high gloss, and lower surface friction.

Stable polyblends of poly(1,4-butylene terephthalate) and poly(ethylene terephthalate) can be molded into useful unreinforced and reinforced articles. See US—A—3,953,394.

It has been proposed to increase the impact strengths of polyesters by adding various modifiers. For example, US—A—3,591,659 discloses that a useful family of modifiers comprises polyalkyl acrylates, methacrylates and/or ethacrylates. US—A—4,044,073 discloses that a useful impact modifier for such polyesters is an aromatic polycarbonate. US—A—4,022,748 discloses that a rubber-elastic graft copolymer having a glass temperature below −20°C. is a useful modifier. US—A—4,034,013, US—A—4,180,494, and US—A—4,096,202 disclose that useful impact modifiers comprise multiple stage polymers having a rubbery first stage and a hard final stage, preferably including units derived from alkyl acrylates, especially butyl acrylates. US—A—4,034,013 (corres. DE—A—2,650,870) discloses an impact modifier combination comprising a blend of a polyurethane and an aromatic polycarbonate. US—A—4,203,887, discloses an impact modifier combination comprising a segmented block copolyester and an aromatic polycarbonate. US—A—4,257,937, discloses an impact modifier combination comprising a blend of a polyalkylacrylate and an aromatic polycarbonate. US—A—4,090,996 discloses an impact modifier combination for poly(1,4-butylene terephthalate) and other polyester resins comprising a selectively hydrogenated monoalkenyl arene-diene block copolymer, and an engineering thermoplastic, e.g., poly(aryl ether), poly(aryl sulfone), polycarbonate, acetal, etc. US—A—3,864,428 discloses poly(butylene terephthalate) alone or combined in blends with other polyesters, impact modified with conjugated diene/vinyl aromatic copolymers grafted with methacrylate monomer and aromatic polycarbonate.

Additional means for modifying the impact strength of polyester compositions are also known. For example, US—A—4,257,937 discloses that poly(1,4-butylene terephthalate) resin or blends of such resin with poly(ethylene terephthalate) resin can be modified with a combination of polyacrylate resin and an aromatic polycarbonate resin. US—A—4,157,997, discloses that polyalkylene terephthalate resins can be impact modified with an organopolysiloxane-polycarbonate block copolymer and a calcium carbonate filler. US—A—4,280,948 discloses that thermoplastic polyester compositions can be modified with a combination of an acrylic or methacrylic grafted polymer of a conjugated diene, either alone or in combination with a vinyl aromatic and an aromatic polycarbonate. US—A—4,267,286, discloses that thermoplastic polyester compositions can be modified with a combination of a polyacrylate resin or a vinyl aromatic-diene block copolymer resin and a poly (1,3-butylene terephthalate). And US—A—4,122,061 discloses that impact modified thermoplastic polyester compositions can be provided by utilizing a polyolefin or olefin based copolymer resin as an impact modifier. Each of the foregoing patents and applications are hereby incorporated by reference.

It is well known that poly(ethylene terephthalate), as an injection molding resin, suffers not only dimensional stability problems due to its semi-crystalline structure but it also exhibits poor notched Izod impact. Attempts to impact modify poly(ethylene terephthalate) with acrylic impact modifiers which are normally effective in poly(1,4-butylene terephthalate) have not been as successful.

It has now been discovered that acrylic impact modified versions of poly(ethylene terephthalate) can exhibit dramatically improved impact resistance by utilizing certain effective amounts of poly(1,4-butylene terephthalate). Surprisingly, replacement of 30 percent, for example, of the poly(ethylene terephthalate) with poly(1,4-butylene terephthalate) provides injection molded parts which exhibit good to excellent impact. This is especially surprising since those skilled in the art would normally expect to see a gradual rise in impact strength as the level of poly(1,4-butylene terephthalate) is increased. Additionally, improvements in tensile strength and tensile elongation can be found in the compositions of the present invention.

Furthermore, it has been discovered that the above described advantageous properties can be obtained even when reprocessed recycled or otherwise scrap poly(ethylene terephthalate) is used in the formulations thereby adding the advantage of economy and material conservation to those of property enhancement.

There are provided by the present invention certain useful thermoplastic compositions which are

2

useful for molding, e.g., injection molding, compression molding, transfer molding, and the like; as well as for other applications, wherein the compositions are comprised of:

(a) a polyester resin comprised of poly(ethylene terephthalate) resin;

(b) an impact modifier therefore comprising:

(i) a poly(1,4-butylene terephthalate) resin;

(ii) a polyacrylate resin; and

(iii) an aromatic polycarbonate resin;

wherein modifier (b) is present in an amount up to, approximately, 60 weight percent based upon the total weight of (a) and (b).

Preferably, impact modifier (b) will be present in an amount of at least about 30 parts by weight per 100 parts of (a) and (b) together, and more preferably, modifier (b) will be present in an amount of 35 to 50 parts by weight per 100 parts of (a) and (b) together.

Preferably, impact modifier (b) will be comprised of

(i) 10 to 30 parts by weight of poly(1,4-butylene terephthalate) resin;

(ii) 10 to 15 parts by weight of polyacrylate resin; and

(iii) 10 to 15 parts by weight of aromatic polycarbonate resin; based upon the total weight of (a), (b)(i), (b)(ii), and (b)(iii).

In the composition of the present invention, the polyester resin (a) will ordinarily have an intrinsic viscosity of at least about 0.4 deciliters/gram when measured in solution in a 60:40 mixture of phenol and tetrachloroethane at 30°C.

The polyacrylate resin (b)(ii) is a core shell resin of the type commonly used to modify polyesters. These materials are commercially available, especially preferred resins being Acryloid KM 330 and KM 653 sold by Rohm & Haas. Such a core shell resin will have a rubbery core which is surrounded by a grafted acrylic shell.

This polyacrylate resin may comprise a multiple stage polymer having a rubbery first stage and a thermoplastic based final stage. More particularly, the polyacrylate resin may be a core-shell resin comprising a poly(styrene-butadiene) based rubbery core and a second stage polymerized from styrene and methyl methacrylate.

The aromatic polycarbonate resin is preferably derived from bisphenol-A.

Naturally, the compositions of the present invention can further comprise (c) fillers and/or reinforcing agents in an amount of from 1 to 60 parts by weight per 100 parts by weight of (a), (b), and (c) together. Additionally, flame-retardant amounts of various effective flame retarding agents can also be utilized.

The polyester resins (a) of the compositions of this invention are available commercially or can be prepared by known techniques such as by the alcoholysis of esters of terephthalic acid with ethylene glycol or butanediol and subsequent polymerization, by heating the glycols with the free acids or with halide derivatives thereof, and similar processes. These are described in US—A—2,465,319, and US—A—3,047,539, and elsewhere.

Illustratively, the high molecular weight poly(ethylene terephthalate) resins will have an intrinsic viscosity of at least about 0.3 deciliters/gram and preferably, at least 0.4 deciliters/gram as measured in 60:40 phenol/tetrachloroethane mixture or a similar solvent at 30°C. The poly(1,4-butylene terephthalate) resins (b)(i) will have intrinsic viscosities of at least 0.6 and more preferably 0.8 dl/g, same basis. The upper limit is not critical, but it will generally be about 1.5 dl/g. Especially preferred poly(ethylene terephthalates) will have an intrinsic viscosity in the range 0.5—1.0; and preferred poly(1,4-butylene terephthalate) resins will be in the range of 0.9—1.2 dl/g.

Especially useful when high melt strength is important are branched high melt viscosity poly(alkylene terephthalate) resins, which include a small amount of e.g., up to 5 mole percent based on the terephthalate units, of a branching component containing at least three ester forming groups. The branching component can be one which provides branching in the acid unit portion or in the glycol unit portion of the polyester, or it can be a hybrid. Illustrative of such branching components are tri- or tetracarboxylic acids, such as trimesic acid, pyromellitic acid, and lower alkyl esters thereof, and the like, or preferably, polyols, and especially preferably, tetrols, such as pentaerythritol, triols, such as trimethylolpropane; or dihydroxy carboxylic acids and hydroxydicarboxylic acids and derivatives, such as tartaric acid, and the like.

The branched poly(1,4-butylene terephthalate) resins and their preparation are described in US—A—3,953,404.

Impact modifier (b) comprises a combination of

(i) a poly(1,4-butylene terephthalate) resin as described above;

(ii) a polyacrylate resin; and

(iii) an aromatic polycarbonate.

The polyacrylate resin (b)(ii) can be made in known ways and they are available from a number of sources, e.g., Rohm & Haas Company, Philadelphia, U.S.A. under the trade designations Acryloid KM330 and KM653. In general, any of the polyalkyl acrylates described in US—A—3,591,659 may be used. Preferably, the polyacrylate resin will be in the form of a rubber-elastic graft copolymer having a glass transition temperature below −20°C. as described in US—A—4,022,748. Especially preferred grafted co-polymers are the core-shell co-polymers of the type available from Rohm & Haas, mentioned above. In general these polyacrylate resins will contain units derived from butadiene or isoprene, alone or in combination with a vinyl aromatic compound, or n-butyl acrylate, alone or in combination with a vinyl aromatic compound. The aforementioned impact modifiers are believed to be disclosed in US—A—4,180,494; US—A—3,808,180; US—A—4,096,202; and US—A—4,260,693. Most preferably, the polyacrylate resins will comprise a two stage polymer having either a butadiene or n-butyl acrylate based rubbery core and a second stage polymerized from methylmethacrylate alone or in combination with styrene. Also present in the first stage may be cross linking monomers and graft linking monomers. Examples of the cross linking monomers include 1,3-butylene diacrylate, divinyl benzene and butylene dimethacrylate. Examples of graft linking monomers are allyl acrylate, allyl methacrylate and diallyl maleate.

Additional preferred impact modifiers are of the type disclosed in US—A—4,292,233. These impact modifiers comprise, generally, a relatively high content of a cross-linked butadiene polymer grafted base having grafted thereon acrylonitrile and styrene.

The polycarbonate resins (b)(iii) can be made in known ways and they are available commercially from sources, e.g., General Electric Company, Pittsfield, Mass., U.S.A., under the trademark "Lexan"®. In general, any of the aromatic polycarbonates described in US—A—4,034,016 can be used, especially those including units derived from bisphenol-A.

In certain preferred features the composition will include fillers, especially fillers such as fibrous (filamentous) glass or clay, mica, talc and the like, preferably clay. The fillers can be untreated or treated with silane or coupling agents, etc. The filamentous glass to be employed as reinforcement in such embodiments of the present compositions is well known to those skilled in the art and is widely available from a number of manufacturers. For compositions ultimately to be employed for electric uses, it is preferred to use fibrous glass filaments comprised of lime-aluminum borosilicate glass that is relatively soda free. This is known as "E" glass. However, other glasses are useful where electrical properties are not so important, e.g., the low soda glass known as "C" glass. The filaments are made by standard processes, e.g., by steam or air blowing, flame blowing and mechanical pulling. The preferred filaments for plastic reinforcement are made by mechanical pulling. The filament diameters range from about 0.00012 (0.00305 mm) to 0.00075 inch (0.0190 mm), but this is not critical to the present invention.

The length of the glass filaments and whether or not they are bundled into fibers and the fibers bundled in turn to yarns, ropes or rovings, or woven into mats, and the like, are also not critical to the invention. However, in preparing the molding compositions, it is convenient to use the filamentous glass in the form of chopped strands of from about one-eighth to about 2 inches (5.08 cm) long. In articles molded from the compositions, on the other hand, even shorter lengths will be encountered because, during compounding considerable fragmentation will occur. This is desirable, however, because the best properties are exhibited by thermoplastic injection molded articles in which the filament lengths lie between about 0.0005 (0.0127 mm) to 0.250 inch (6.35 mm).

The amount of the filler can vary widely depending on the formulation and needs of the particular composition in a given application, preferably, however, the reinforcing filler will comprise from 1 to 60% by weight of filler (c) and (a) and (b), combined.

The impact modified polyesters, alone, or in combination with a filler can be rendered flame retardant with an effective amount of a conventional flame retardant agent (d). As is well known, flame retardants can be based on elementary red phosphorus, phosphorus compounds, halogen and nitrogen compounds alone or preferably in further combination with synergists, such as antimony compounds. Especially useful are polymeric and oligomeric flame retardant agents comprising tetrabromobisphenol-A carbonate units, see, for example, US—A—3,833,685.

Other ingredients, such as dyes, pigments, drip retardants, nucleating agents and the like can be added for their conventionally employed purposes.

The compositions of this invention can be prepared by a number of procedures. In one method, the modifier (b) and any filler or fire retardants are put into an extrusion compounder with the polyester resin base (a) to produce molding pellets. The modifier, and filler and/or reinforcement, if any, are dispersed in a matrix of the resin in the process. In another procedure, the modifier (b) is mixed with the polyester resin base (a) by dry blending, then either fluxed on a mill and comminuted, or then extruded and chopped. The modifying agent (b) can also be mixed with the polyester resin base (a) and directly molded, e.g., by injection or transfer molding techniques.

Ordinarily, it is preferable to thoroughly free all of the ingredients (polyester resin, modifier, reinforcement, filler, if used, and any optional conventional additives) from as much water as possible. However, it has recently been disclosed that polyester compositions may be prepared having a small moisture content. See US—A—4,351,758.

In addition, compounding should be carried out to ensure that the residence time in the machine is short; the temperature is carefully controlled; the friction heat is utilized; and an intimate blend between the polyester resin and the modifier is obtained.

Although it is not essential, best results are obtained if the ingredients are pre-compounded, pelletized and then molded. Pre-compounding can be carried out in conventional equipment. For example, after carefully pre-drying the polyester and modifier and the reinforcing agent, or filler, if used, e.g., under vacuum at 100°C. for 12 hours, a single screw extruder is fed with a dry blend of the ingredients, the screw employed having a long transition section to ensure proper melting. On the other hand, a twin screw extrusion machine, e.g., a 28 mm Werner Pfleiderer machine can be fed with resins and screw extrusion machine, e.g., a 28 mm Werner Pfleiderer machine can be fed with resins and additives at the feed port and reinforcement down stream. In either case, a generally suitable machine temperature will be about 450° to 550°F (232°C to 288°C).

The pre-compounded composition can be extruded and cut up into molding compounds such as conventional granules, pellets, etc., by standard techniques.

The following examples illustrate several embodiments of the present invention but are not intended to limit the scope of the invention in any manner. Unless otherwise specified, all parts are by weight.

Examples 1 & 2

Dry blends of reprocessed polyethylene terephthalate resin (PET) having a PET content of 99% minimum and having an intrinsic viscosity of at least approximately 0.50 dl/g and a melting point of approximately 250°C; poly(1,4-butylene terephthalate) resin (PBT) having an intrinsic viscosity of 1.05 dl/g and a melt viscosity of approximately 6,200 poise (620 Pa/s) acrylic rubber, aromatic polycarbonate of bisphenol-A and mold release and stabilizing additives were compounded and extruded at 530°F (277°C), in an extruder. The extrudate was pelletized and injection molded at 510° F (266°C). The formulations and physical properties are shown in Table 1.

The results in Table 1 clearly show the efficiency achieved by the compositions of the present invention. The modified compositions of Examples 1 and 2 show an unexpected increase in impact strength.

## TABLE 1

### Impact modified poly(ethylene terephthalate)

| Composition (parts by weight) | A* | C* | Example 1 | 2 |
|---|---|---|---|---|
| Poly(ethylene terephthalate)[a] | — | 68.3 | 47.8 | 47.8 |
| Poly(1,4-butylene terephthalate)[b] | 68.3 | — | 20.5 | 20.5 |
| Polyacrylate rubber[c] | 15.0 | 15.0 | 15.0 | 15.0 |
| Aromatic polycarbonate[d] | 15.0 | 15.0 | 15.0 | 15.0 |
| Mold release and stabilizers (to make 100 parts) | | | | |
| **Properties** | | | | |
| Notched Izod, ft. lbs./in. (m.kg/cm) | 19.6 (1.046) | 2.5 (0.133) | 16.5 (0.0880) | 16.0 (0.854) |
| Unnotched Izod, ft. lbs./in. (m.kg/cm) | — | — | — | 34.6 |
| Flexural strength, psi (N/mm$^2$) | 10,300 (70.96) | 10,300 (70.96) | 10,200 (70.27) | 10,600 (73.03) |
| Flexural modulus, psi (N/mm$^2$) | 289,200 (199.26) | 290,000 (199.81) | 292,300 (201.39) | 270,800 (186.58) |
| Tensile strength, psi (N/mm$^2$) | 6,160 (42.44) | 6,530 (44.99) | 6,140 (42.30) | 6,600 (45.47) |
| Tensile elongation, %** | 120 | 130 | 160 | 220 |
| Specific gravity | 1.25 | 1.28 | 1.26 | 1.27 |

*Comparative examples
**Performed on Type V tensile bars
[a]Reprocessed PET, Intrinsic Viscosity, 0.5 dl/gm minimum
[b]"Valox"® 315, General Electric Company, Intrinsic Viscosity 1.05 dl/gm
[c]"Acryloid"® KM330, Rohm & Haas Company
[d]"Lexan"® 135-111, General Electric Company

Example 3

The general procedure of Example 1 was followed to provide the compositions described in Table 2. As can be seen once again, the impact modified poly(ethylene terephthalate) (PET) which has been modified with a small proportion of poly(1,4-butylene terephthalate) (PBT) showed improved impact resistance compared to PET alone. In fact, the impact resistance of the PET which had been modified with a portion of PBT actually approached the impact resistance of PBT alone.

## TABLE 2

### Impact modification of PET

| Composition (parts by weight) | Example A* | 3 | B* |
|---|---|---|---|
| Poly(ethylene terephthalate)[a] | — | 45.5 | 65.0 |
| Poly(1,4-butylene terephthalate)[b] | 65.0 | 19.5 | — |
| Polyacrylate rubber[c] | 15.0 | 15.0 | 15.0 |
| Aromatic polycarbonate[d] | 15.0 | 15.0 | 15.0 |
| Mold release and stabilizers (to make 100 parts) | | | |
| **Properties** | | | |
| Notched Izod, ft. lbs./in. (m.kg/cm) | 17.0 (0.907) | 15.7 (0.838) | 13.3 (0.709) |
| Notched Izod @ −30°, ft. lbs./in. (m.kg/cm) | 16.6 (0.886) | 4.8 (0.256) | 3.4 (0.181) |
| Unnotched Izod, ft. lbs./in. (m.kg/cm) | NB | NB | NB |
| Tensile strength, psi (N/mm$^2$) | 5,700 (39.27) | 5,820 (40.10) | 6,080 (41.89) |
| Tensile Elongation, %** | 170 | 180 | 180 |

*Comparative examples
**Performed on Type V tensile bars
[a]Reprocessed PET, Intrinsic Viscosity 0.5 dl/gm minimum
[b]"Valox"® 315, General Electric Company, Intrinsic Viscosity 1.05 dl/gm
[c]"Acryloid" KM653, Rohm & Haas Company
[d]"Lexan"® 135-111, General Electric Company

**Claims**

1. A thermoplastic composition comprising:
(a) a polyester resin base of poly(ethylene terephthalate) resin;
(b) an impact modifier therefor comprising:
(i) a poly(1,4-butylene terephthalate) resin;
(ii) a polyacrylate resin; and
(iii) an aromatic polycarbonate resin;
wherein modifier (b) is present in an amount up to 60 weight percent based upon the total weight of (a) and (b).

2. A composition as in Claim 1 wherein said impact modifier (b) is present in an amount of at least about 30 parts by weight per 100 parts by weight of (a) and (b) together.

3. A composition as in Claim 1 wherein said impact modifier (b) is present in an amount of, approximately 35 to 50 parts by weight per 100 parts by weight of (a) and (b) together.

4. A composition as in Claim 1 wherein said polyester resin base (a) has an intrinsic viscosity of at least about 0.4 deciliters/gram when measured in solution in a 60:40 mixture of phenol and tetrachloroethane at 30°C.

5. A composition as in Claim 1 wherein said polyacrylate resin (b)(ii) is a core shell resin having a rubbery core surrounded by a grafted acrylic shell.

6. A composition as in Claim 1 wherein said polyacrylate resin comprises a multiple stage polymer having a rubbery first stage and a thermoplastic based final stage.

7. A composition as in Claim 1 wherein said polyacrylate resin (b)(ii) is a core-shell resin having a butadiene based rubbery core and a second stage polymerized from styrene and methyl methacrylate.

8. A composition as in Claim 1 wherein said polyacrylate resin (b)(ii) is a core-shell resin having a crosslinked acrylic first stage also containing graft linking monomer and a second stage polymerized from methyl methacrylate.

9. A composition as in Claim 1 wherein said polyacrylate resin (b)(ii) is a core-shell resin comprising a poly(styrene-butadiene) based rubbery core and a second stage polymerized from styrene and methyl methacrylate.

10. A composition as in Claim 1 wherein said polyacrylate resin (b)(ii) is a core-shell resin comprising a relatively high content of a cross-linked butadiene based core and a second stage polymerized from acrylonitrile and styrene.

11. A composition as in Claim 1 wherein said aromatic polycarbonate resin includes units derived from bisphenol-A.

12. A composition as in Claim 1 further comprising (c) a filler or reinforcing agent in an amount of from 1 to 60 parts by weight per 100 parts by weight of (a), (b), and (c) together.

13. A composition as in Claim 1 further comprising (d) a flame-retardant amount of a flame retarding agent.

14. A composition as in Claim 1 further comprising a flame retardant amount of a flame retarding agent in combination with a synergist.

15. A composition as in Claim 14 wherein the flame retardant synergist is an antimony compound.

16. A composition as in Claim 1 wherein said impact modifier (b) is comprised of
(i) 10 to 30 parts by weight of said poly(1,4-butylene terephthalate) resin;
(ii) 10 to 15 parts by weight of said polyacrylate resin; and
(iii) 10 to 15 parts by weight of said aromatic polycarbonate resin; based upon the total weight of (a), (b)(i), (b)(ii), and (b)(iii).

17. A process for improving the impact strength of poly(ethylene terephthalate) resin comprising:
replacing up to about 60 weight percent of said poly(ethylene terephthalate) resin with an impact modifying amount of an impact modifier which comprises:
(i) a poly(1,4-butylene terephthalate) resin;
(ii) a polyacrylate resin; and
(iii) an aromatic polycarbonate resin.

**Patentansprüche**

1. Thermoplastische Zusammensetzung enthaltend
(a) eine Polyesterharzbasis aus Poly(äthylenterephthalat)harz,
(b) ein Schlagmodifizierungsmittel dafür enthaltend:
(i) ein Poly(1,4-butylenterephthalat)-Harz,
(ii) ein Polyacrylatharz und
(iii) ein aromatisches Polycarbonatharz,
worin das Modifizierungsmittel (b) in einer Menge von biz zu 60 Gew.-% bezogen auf das Gesamtgewicht von (a) und (b) vorhanden ist.

2. Zusammensetzung nach Anspruch 1, worin das Schlagmodifizierungsmittel (b) in einer Menge von wenigstens etwa 30 Gewichtsteilen pro 100 Gewichtsteile von (a) und (b) zusammen vorhanden ist.

9

**0 113 096**

3. Zusammensetzung nach Anspruch 1, worin das Schlagmodifizierungsmittel (b) in einer Menge von ungefähr 35 bis 50 Gewichtsteilen pro 100 Gewichtsteile von (a) und (b) zusammen vorhanden ist.

4. Zusammensetzung nach Anspruch 1, worin das Basispolyesterharz (a) eine grundmolare Viskositätszahl von wenigstens etwa 0,4 dl/g aufweist, gemessen in einer Lösung einer 60:40-Mischung von Phenol und Tetrachloräthan bei 30°C.

5. Zusammensetzung nach Anspruch 1, worin das Polyacrylatharz (b)(ii) ein Kernmantelharz ist mit einem gummiartigen Kern, der von einem gepfropften Acrylmantel umgeben ist.

6. Zusammensetzung nach Anspruch 1, worin das Polyacrylatharz ein Mehrstufenpolymer umfaßt, welches eine gummiartige erste Stufe und auf einem Thermoplasten basierende Endstufe aufweist.

7. Zusammensetzung nach Anspruch 1, worin das Polyacrylathatz (b)(ii) ein Kern-Mantelharz ist mit einem gummiartigen Kern auf Butadienbasis und einer zweiten Stufe, die aus Styrol und Methylmethacrylat polymerisiert ist.

8. Zusammensetzung nach Anspruch 1, worin das Polyacrylatharz (b)(ii) ein Kern-Mantelharz ist mit einer vernetzten acrylischen ersten Stufe, die auch durch pfropfengebundenes Monomer enthält und eine zweite Stufe aus polymerisiertem Methylmethacrylat.

9. Zusammensetzung nach Anspruch 1, worin das Polyacrylatharz (b)(ii) ein Kern-Mantelharz ist, welches einen gummiartigen Kern auf Poly(styrol-butadien)-Basis und eine zweite Stufe aus polymerisiertem Styrol und Methylmethacrylat enthält.

10. Zusammensetzung nach Anspruch 1, worin das Polyacrylatharz (b)(ii) ein Kern-Mantelharz ist, welches einen relativ hohen Gehalt eines vernetzten Kernes auf Butadienbasis und eine zweite Stufe aus polymerisiertem Acrylnitril und Styrol enthält.

11. Zusammensetzung nach Anspruch 1, worin das aromatische Polycarbonatharz Einheiten umfaßt, die von Bisphenol-A abgeleitet sind.

12. Zusammenseztung nach Anspruch 1, die weiterhin (c) einern Füllstoff oder ein verstärkendes Mittel in einer Menge von 1 bis 60 Gewichtsteilen pro 100 Gewichtsteile von (a), (b) und (c) zusammen aufweist.

13. Zusammensetzung nach Anspruch 1, die weiterhin (d) eine flammhemmende Menge eines flammhemmenden Mittels enthält.

14. Zusammensetzung nach Anspruch 1, die weiterhin eine flammhemmende Menge eines flammhemmenden Mittels in Kombination mit einem Synergisten aufweist.

15. Zusammensetzung nach Anspruch 14, worin der flammhemmende Synergist eine Antimonverbindung ist.

16. Zusammensetzung nach Anspruch 1, worin das Schlagmodifizierungsmittel (b) enthält:
   (i) 10 bis 30 Gewichtsteile des Poly(1,4-butylen-terephthalat)-Harzes,
   (ii) 10 bis 15 Gewichtsteile des Polyacrylatharzes und
   (iii) 10 bis 15 Gewichtsteile des aromatischen Polycarbonatharzes bezogen auf das Gesamtgewicht von (a), (b)(i), (b)(ii) und (b)(iii).

17. Verfahren zur Verbesserung der Schlagfestigkeit von Poly(äthylenterephthalat)-Harz umfassend:
   den Ersatz von bis zu etwa 60 Gewichts-% des Poly(äthylenterephthalat)-Harzes durch eine die Schlagfestigkeit modifizierende Menge eines die Schlagfestigkeit modifizierenden Mittels, welches enthält:
   (i) ein Poly(1,4-butylen-terephthalat)-Harz,
   (ii) ein Polyacrylatharz und
   (iii) ein aromatisches Polycarbonatharz.

**Revendications**

1. Une composition thermoplastique comprenant:
(a) une résine de polyester de base faite d'une résine de poly(téréphtalate d'éthylène);
(b) un modificateur de la résistance au choc de celle-ci comprenant:
   (i) une résine de poly(téréphtalate de 1,4-butylène);
   (ii) une résine de polyacrylate; et
   (iii) une résine de polycarbonate aromatique;
dans laquelle le modificateur (b) est présent en une quantité allant jusqu'à 60% en poids par rapport au poids total de (a) et (b).

2. Une composition comme dans la revendication 1, dans laquelle ledit modificateur de la résistance au choc (b) est présent en une quantité d'au moins environ 30 parties en poids pour 100 parties en poids de (a) et (b) réunis.

3. Une composition comme dans la revendication 1 dans laquelle ledit modificateur de la résistance au choc (b) est présent en une quantité d'environ 35 à 50 parties en poids pour 100 parties en poids de (a) et (b) réunis.

4. Une composition comme dans la revendication 1 dans laquelle ladite résine de polyester de base (a) a une viscosité intrinsèque d'au moins environ 0,4 dl/g lorsqu'on la mesure en solution dans un mélange 60/40 de phénol et de tétrachloroéthane à 30°C.

5. Une composition comme dans la revendication 1, dans laquelle ladite résine de polyacrylate (b)(ii) est une résine centre-enveloppe ayant un centre caoutchouteux entouré d'une enveloppe acrylique greffée.

6. Une composition comme dans la revendication 1, dans laquelle ladite résine de polyacrylate

10

comprend un polymère à plusieurs couches ayant une première couche caoutchouteuse et une couche finale à base d'un thermoplastique.

7. Une composition comme dans la revendication 1, dans laquelle ladite résine de polyacrylate (b)(ii) est une résine centre-enveloppe ayant un centre caoutchouteux à base de butadiène et une seconde couche polymérisée à partir de styrène et de méthacrylate de méthyle.

8. Une composition comme dans la revendication 1, dans laquelle ladite résine de polyacrylate (b)(ii) est une résine centre-enveloppe ayant une première couche acrylique réticulée contenant également un monomère de liaison de greffage et une seconde couche polymérisée à partir de méthacrylate de méthyle.

9. Une composition comme dans la revendication 1, dans laquelle ladite résine de polyacrylate (b)(ii) est une résine centre-enveloppe comprenant un centre caoutchouteux à base de poly(styrène-butadiène) et une seconde couche polymérisée à partir de styrène et de méthacrylate de méthyle.

10. Une composition comme dans la revendication 1, dans laquelle ladite résine de polyacrylate (b)(ii) est une résine centre-enveloppe ayant une teneur relativement élevée d'un centre à base de butadiène réticulé et une seconde couche polymérisée à partir d'acrylonitrile et de styrène.

11. Une composition comme dans la revendication 1, dans laquelle ladite résine de polycarbonate aromatique comprend des motifs dérivés de bisphénol A.

12. Une composition comme dans la revendication 1, comprenant de plus (c) une charge ou un agent de renfort en une quantité de 1 à 60 parties en poids pour 100 parties en poids de (a), (b) et (c) réunis.

13. Une composition comme dans la revendication 1, comprenant de plus (d) une quantité ignifuge d'un agent d'ignifugation.

14. Une composition comme dans la revendication 1 comprenant de plus une quantité ignifuge d'un agent d'ignifugation en combinaison avec un synergiste.

15. Une composition comme dans la revendication 14, dans laquelle le synergiste d'ignifugation est un composé d'antimoine.

16. Une composition comme dans la revendication 1, dans laquelle ledit modificateur de la résistance au choc (b) est constitué de
   (i) 10 à 30 parties en poids de ladite résine de poly(téréphtalate de 1,4-butylène);
   (ii) 10 à 15% en poids de ladite résine de polyacrylate; et
   (iii) 10 à 15 parties en poids de ladite résine de polycarbonate aromatique;
par rapport au poids total de (a), (b)(i), (b)(ii) et (b)(iii).

17. Un procédé pour améliorer la résistance au choc d'une résine de poly(téréphtalate d'éthylène) comprenant:
   le remplacement de jusqu'à environ 60% en poids de ladite résine de poly(téréphtalate d'éthylène) avec une quantité modifiant la résistante au choc d'un modificateur de la résistance au choc qui comprend:
   (i) une résine de poly(térephtalate de 1,4-butylène);
   (ii) une résine de polyacrylate; et
   (iii) une résine de polycarbonate aromatique.